# FASCICULE DE BREVET EUROPEEN

(11) **EP 1 923 543 B1**
(45) Date de publication et mention de la délivrance du brevet: **06.01.2010**
(21) Numéro de dépôt: 07120667.6
(22) Date de dépôt: 14.11.2007
(51) Int. Cl.: F01D 25/24, F02K 3/072, F01D 25/16

(54) **Dispositif de fixation de stator de turbine libre par double centrage et turbopropulseur doté d'un tel dispositif**
Vorrichtung zum Befestigen eines freien Turbinenstators durch doppeltes Zentrieren und Turboprop mit einer solchen Vorrichtung
Device for fixing a free turbine stator by double centring and turboprop comprising such a device

(30) Priorité: 15.11.2006 FR 0654916
(43) Date de publication de la demande: 21.05.2008
(73) Titulaire: SNECMA, 75015 Paris (FR)
(72) Inventeur: Brault, Michel, 91480, Qunicy sous Senart (FR); Gallet, François, 75012, Paris (FR)
(74) Mandataire: Barbin le Bourhis, Joël

(56) Documents cités:
- EP-A- 1 340 902
- EP-A- 1 387 060
- EP-A- 1 626 002
- EP-A- 1 655 457
- EP-A- 1 655 475
- EP-A1- 1 394 385

## Description

La présente invention concerne le domaine des turbines libres montées sur turbopropulseur.

L'invention concerne plus particulièrement un dispositif de fixation d'un stator de turbine libre sur un carter de générateur de gaz coaxial avec ce stator de turbine selon un axe commun, comportant une bride portant une pluralité de pièces d'assemblage (par exemple des boulons) qui permettent une première liaison amovible du stator de turbine sur le carter du générateur de gaz, la bride assurant un premier centrage de ce stator de turbine sur ce carter du générateur de gaz. EP 1 340 902 montre un tel dispositif.

Dans certains systèmes de propulsion aéronautique, par exemple un propulseur à hélices non-carénées (UDF - "unducted fan") avec deux hélices contrarotatives, le stator de la turbine portant la ou les hélices est fixé sur le carter structural de ce générateur. Le stator de la turbine est ainsi coaxial avec le carter du générateur. Il est préférable d'avoir un montage modulaire du système de propulsion, c'est-à-dire que le stator de la turbine est amovible et peut être détaché puis fixé à nouveau sur le carter du générateur de gaz. En effet, la turbine peut ainsi être séparée du générateur de gaz pour subir des opérations de maintenance, sans qu'il soit nécessaire de démonter le générateur de gaz de l'avion, opération lourde et coûteuse. La maintenance de la turbine libre est donc facilitée.

La liaison entre le stator de turbine et le carter du générateur est par exemple effectuée par l'intermédiaire d'une bride annulaire portant une couronne de boulons qui serre le stator sur le carter et le bloque axialement sur le carter. La bride est située à une extrémité du stator. Cette bride est centrée sur le carter grâce à la couronne de boulons de la bride, et grâce à un centrage court, c'est-à-dire que l'alignement axial de la bride sur le carter s'effectue en outre par le fait que la bride possède une surface extérieure annulaire cylindrique qui coulisse dans une surface intérieure annulaire cylindrique du carter, les deux surfaces cylindriques ayant le même rayon par rapport à l'axe commun. Ainsi, la bride s'encastre dans le carter, la longueur d'encastrement étant égale à la dimension de cette surface intérieure cylindrique du carter selon l'axe commun du carter et du stator.

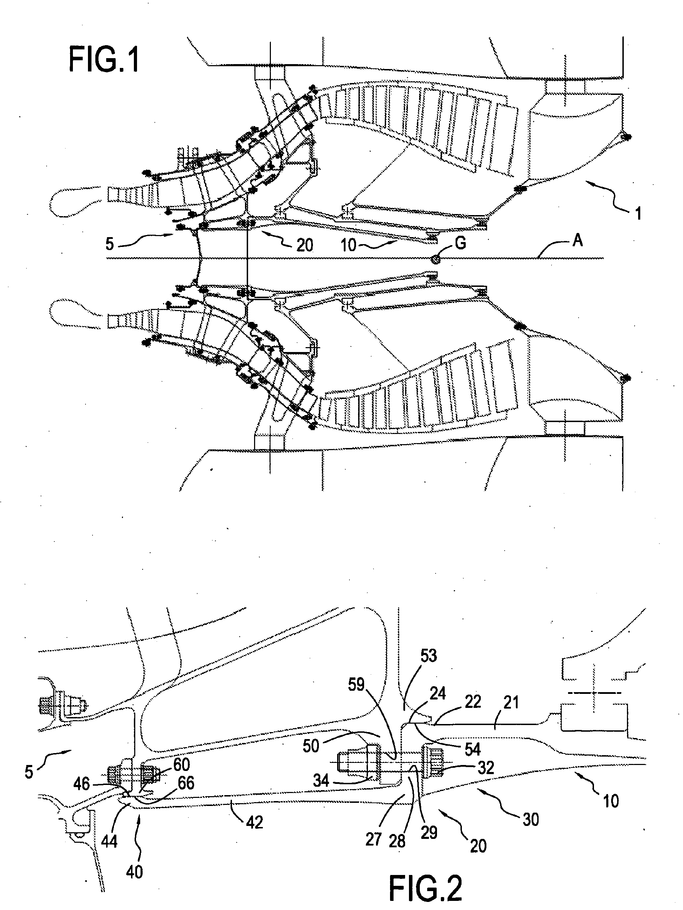

Cependant, pour des raisons d'encombrement, d'assemblage, et de masse, le rayon de la bride et la longueur d'encastrement sont limités. Or le centre de gravité G de la turbine 1, qui se situe environ à mi-chemin entre la bride et l'autre extrémité de cette turbine le long de l'axe commun, est éloigné axialement de la bride 20 comme le montre la figure 1. La masse de la turbine étant importante, il en résulte que les importants efforts d'inertie provenant des accélérations et effets gyroscopiques de la turbine, et les vibrations de celle-ci vont générer des couples importants sur la bride. Ces couples sont suffisamment élevés pour risquer de casser la liaison au niveau de la bride par rupture des boulons, ou de déformer la structure à parois minces de la turbine.

Une possibilité pour s'affranchir du problème posé par cette liaison consiste à utiliser un stator de turbine et un carter de générateur monobloc. Cependant, on perd alors le bénéfice de la modularité du stator de turbine par rapport au générateur, et l'encombrement axial du générateur est plus important.

Dans le document EP 1 340 902, le dispositif de fixation comporte en outre une seconde liaison amovible du stator de turbine sur le carter du générateur de gaz qui est éloignée axialement de la bride en direction du générateur de gaz et qui permet un second centrage du stator de turbine sur le carter.

La présente invention vise à remédier à ces inconvénients et est définie dans la revendication 1.

L'invention vise à proposer un dispositif qui permette de diminuer les contraintes et efforts de contact au niveau de la bride et des boulons, tout en conservant un montage modulaire entre le stator de turbine et le carter de générateur.

Ce but est atteint grâce au fait que la seconde liaison est un assemblage glissant.

Grâce à ces dispositions, les moments des efforts d'inertie générés par les mouvements de la turbine sont répartis entre la seconde liaison et la bride. L'éloignement axial entre la seconde liaison et la bride, et le fait que cette seconde liaison soit plus éloignée que la bride du centre de gravité du stator de turbine (puisqu'elle est plus proche que la bride du générateur de gaz) créent un bras de levier d'encastrement qui permet de diminuer les contraintes sur les moyens de liaison (par exemple des boulons) avec le carter du générateur de gaz au niveau de la bride en distribuant ces contraintes sur l'ensemble de la structure du stator. Les contraintes étant mieux réparties, la structure peut être plus légère.

De plus, la seconde liaison étant amovible, la modularité du stator de turbine par rapport au carter de générateur est conservée, ce qui permet une maintenance plus aisée de la turbine. De plus, au niveau de la seconde liaison, le stator de turbine est assemblé avec le carter du générateur de gaz en le faisant simplement coulisser par rapport à ce dernier. Ceci facilite donc l'assemblage du stator avec le générateur de gaz. En outre, le fait que la seconde liaison permette un second centrage du stator de turbine sur le générateur de gaz facilite le montage de ce stator sur le générateur.

Avantageusement, la première liaison est une liaison d'encastrement.

La bride est configurée de telle sorte qu'au niveau de la première liaison le stator de turbine est encastré dans le carter du générateur de gaz. Cette première liaison est donc rigide, ce qui permet de bien maintenir la turbine dans l'axe du générateur de gaz.

L'invention concerne aussi un turbopropulseur comportant un générateur de gaz et une turbine libre dont le carter est assemblé à ce générateur de gaz par un dispositif de fixation selon la définition qui précède.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 montre un stator de turbine et un générateur de gaz assemblés avec un dispositif de fixation selon l'invention,
- la figure 2 est une vue détaillée du dispositif de fixation de la figure 1,
- La figure 3 est une vue en perspective et en coupe de la bride et de l'élément de prolongation du dispositif de fixation de la figure 2,
- La figure 4 est une vue en perspective et en coupe de la bride et de l'élément de prolongation du dispositif de fixation selon une variante de réalisation de l'invention.

La figure 1 illustre un carter 5 d'un générateur de gaz et une turbine 1 dont le stator 10 est assemblé à ce carter 5. Dans le cas illustré, la turbine 1 est une turbine d'un propulseur à hélices non-carénées (UDF - "unducted fan") comportant deux hélices contrarotatives. Le stator 10 de turbine est assemblé sur le carter 5 du générateur de telle sorte que le stator et le carter soient coaxiaux, c'est-à-dire que leurs axes de symétrie respectifs sont confondus en un axe commun A. Dans le texte qui suit, les adjectifs amont et aval se rapportent au sens d'écoulement des gaz selon l'axe commun A, c'est-à-dire de la gauche vers la droite sur la figure 1.

L'extrémité amont du stator 10 de turbine est assemblée ou fixée sur une extrémité aval du carter 5 du générateur de gaz par l'intermédiaire de deux liaisons, illustrées sur la figure 2. On détaille tout d'abord la première liaison.

La première liaison comprend une bride 20 qui porte une pluralité de pièces d'assemblage 30 qui permettent de fixer la bride 20 sur le carter 5. Ces pièces d'assemblage 30 sont par exemple des boulons constitués de vis avec écrous sertis. Elles peuvent aussi être par exemple des goujons avec écrous. Elles peuvent également être par exemple des vis avec joncs et écrous. La figure 2 montre des vis 32 avec écrous sertis 34. La bride 20 comporte une partie radiale 28 qui forme une couronne annulaire dont l'axe est l'axe commun A. La partie radiale 28 est percée de premiers trous 29 selon l'axe commun A répartis le long de la circonférence de la partie radiale 28. Le carter 5 comporte une couronne annulaire 50 de carter dont l'axe est l'axe commun A, et qui s'étend radialement vers l'axe commun A. La couronne annulaire 50 de carter est percée de second trous 59 selon l'axe commun A répartis le long de la circonférence de la couronne annulaire 50 de carter. La face amont de la partie radiale 28 et la face aval de la couronne annulaire 50 de carter se situent donc dans un plan perpendiculaire à l'axe commun A. La face amont de la partie radiale 28 s'appuie sur la face aval de la couronne annulaire 50 de carter de telle sorte que les premiers trous 29 et les second trous 59 viennent en regard les uns des autres. Ainsi, les vis 32 s'insèrent dans les premiers trous 29 et les second trous 59 et se vissent sur des écrous sertis 34 de façon à maintenir la partie radiale 28 et la couronne annulaire 50 serrées l'une contre l'autre et la face amont de la partie radiale 28 et la face aval de la couronne annulaire 50 de carter en contact. De façon similaire, si des pièces d'assemblage 30 autres que des systèmes vis-écrous sont utilisées, elles maintiennent en contact la face amont de la partie radiale 28 et la face aval de la couronne annulaire 50 de carter. On comprend qu'ainsi la bride 20 empêche le déplacement axial du stator 10 de turbine par rapport au carter 5 du générateur. Par ailleurs, la bride 20, par l'intermédiaire des pièces d'assemblage 30, permet un premier centrage du stator 10 de turbine par rapport au carter 5.

La bride 20 comprend une partie axiale 21 qui s'étend vers la turbine 1 sensiblement selon l'axe commun A, c'est-à-dire vers la droite sur la figure 2. Une partie 24 de la surface radialement extérieure 22 de cette partie axiale 21 est en contact annulaire avec la surface radialement intérieure 54 d'une protubérance annulaire 53 de la couronne annulaire 50 de carter, cette protubérance annulaire 53 s'étendant axialement en direction du stator 10 de turbine. La partie 24 de la surface radialement extérieure 22 est adjacente à la face amont de la partie radiale 28 de la bride 20. Pour permettre l'assemblage entre le stator 10 et le carter 5, la partie axiale 21 de la bride 20 est plus éloignée radialement de l'axe commun A que les premiers trous 29. Ainsi, la bride 20 est en contact avec le carter 5 à la fois sur la face amont de sa partie radiale 28, et sur une partie 24 de sa surface radialement extérieure 22, ce qui réalise un encastrement entre le stator 10 de turbine et le carter 5 du générateur au niveau de la première liaison. De plus, la protubérance annulaire 23 contribue au premier centrage du stator 10 de turbine sur le carter 5.

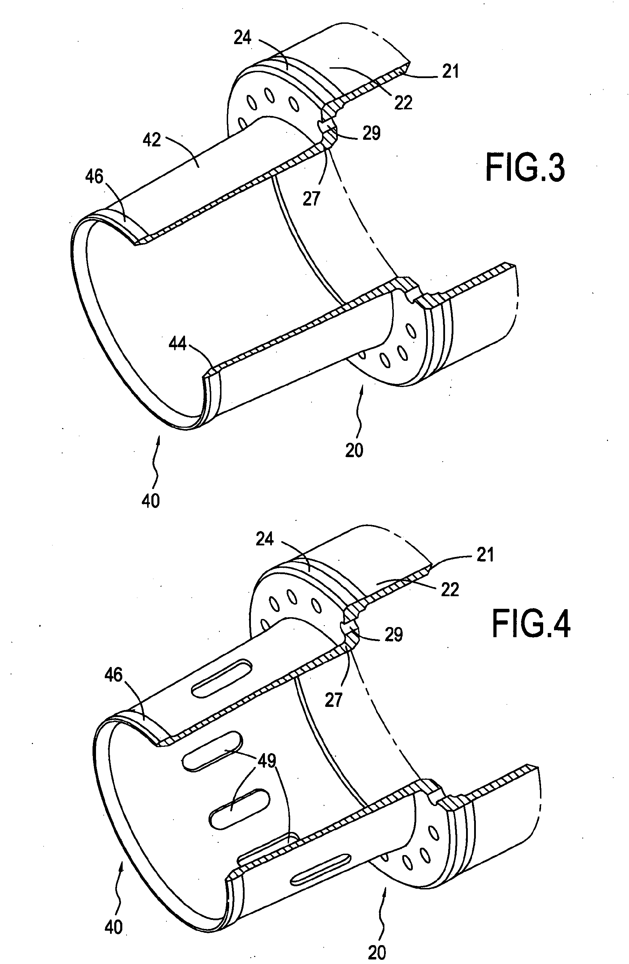

On détaille maintenant la seconde liaison. La partie radialement intérieure 27 de ladite bride 20, c'est-à-dire la partie radialement intérieure de la partie radiale 28, se prolonge selon l'axe commun A (en direction axiale) vers le carter 5 du générateur (c'est-à-dire vers la gauche sur la figure 2) par un élément de prolongation 42. L'élément de prolongation est donc sensiblement parallèle à l'axe commun A, et est plus proche radialement de l'axe commun A que les premiers trous 29. L'élément de prolongation 42 est constitué d'un cylindre dont l'axe est l'axe commun A, comme illustré sur les figures 2 et 3.

L'élément de prolongation 42 a une extrémité axiale 44 la plus éloignée du stator 10 de turbine. L'extrémité axiale 44 de l'élément de prolongation 42 est en contact glissant avec le carter 5 du générateur de gaz, la surface radialement extérieure 46 de l'extrémité axiale 44 de l'élément de prolongation 42 étant en contact avec une surface radialement intérieure 66 d'une partie 60 du carter 5. La surface radialement extérieure 46 de l'extrémité axiale 44 est donc libre de glisser selon la direction de l'axe commun A par rapport à cette surface radialement intérieure 66. L'extrémité axiale 44 et la surface radialement extérieure 46 sont annulaires, continues sur tout le long de leur circonférence autour de l'axe commun A.

Ainsi, l'élément de prolongation 42 joue le rôle d'un bras de levier d'encastrement, la longueur d'encastrement étant la distance entre l'extrémité axiale 44 et la partie radiale 28. Les moments des efforts d'inertie générés par les mouvements du stator 10 de turbine se répartissent alors entre ce second centrage et la bride 20, ce qui permet de distribuer l'énergie de déformation sur l'ensemble de la structure du stator 10, et non plus uniquement sur la couronne de boulons. On note que sans cet élément de prolongation 42, la longueur d'encastrement se réduirait à la longueur de contact selon l'axe commun A entre la bride 20 et le carter 5, c'est-à-dire la longueur selon l'axe commun A de la partie 24 de la surface radialement extérieure 22 de la bride 20.

Par ailleurs, le fait que la seconde liaison soit un contact glissant selon la direction de l'axe commun A permet de conserver la modularité entre le stator 10 de turbine et le carter 5 du générateur. Cela permet également d'assurer un second centrage de ce stator 10 de turbine sur le carter 5.

En variante, l'élément de prolongation 42 peut être percé de trous oblongs 49 allongés selon l'axe commun A, comme illustré sur la figure 4. Ces trous permettent à la fois d'alléger la structure puisque l'élément de prolongation comprend moins de matière, et de permettre de façon plus aisée le passage de servitudes telles que des câbles, des canalisations de fluides, et autres.

Le dispositif de fixation a été décrit dans le cas du stator d'une turbine d'un propulseur à hélices non-carénées (propulseur de type UDF). Cependant ce dispositif de fixation peut aussi s'appliquer au cas d'autres turbines nécessitant un montage modulaire sur un générateur de gaz.

## Revendications

1. Dispositif de fixation d'un stator (10) de turbine libre sur un carter (5) de générateur de gaz coaxial avec ce stator de turbine selon un axe commun (A), comportant une bride (20) portant une pluralité de pièces d'assemblage (30) qui permettent une première liaison amovible dudit stator (10) de turbine sur ledit carter (5) du générateur de gaz, ladite bride (20) assurant un premier centrage de ce stator de turbine sur ce carter (5) du générateur de gaz, ledit dispositif comportant en outre une seconde liaison (40) amovible dudit stator de turbine (10) sur ledit carter (5) de générateur de gaz qui est éloignée axialement de la bride (20) en direction dudit générateur de gaz et qui permet un second centrage dudit stator (10) de turbine sur ledit carter (5), **caractérisé en ce que** ladite seconde liaison est un assemblage glissant.

2. Dispositif de fixation selon la revendication 1, **caractérisé en ce que** ladite première liaison est une liaison d'encastrement.

3. Dispositif de fixation selon la revendication 2, **caractérisé en ce que** ladite première liaison d'encastrement est réalisée par le fait que ladite bride (20) comporte une partie radiale (28) qui est serrée contre une couronne annulaire (50) du carter (5) par lesdites pièces d'assemblage (30), et qu'une partie (24) de la surface radialement extérieure (22) de ladite bride est en contact annulaire avec la surface radialement intérieure (54) d'une protubérance annulaire (53) de ladite couronne annulaire (50) de carter s'étendant axialement en direction dudit stator (10) de turbine.

4. Dispositif de fixation selon l'une quelconque des revendications 1 à 3, **caractérisé en ce que** ladite seconde liaison (40) est constituée par l'extrémité axiale (44) d'un élément de prolongation (42) qui prolonge en direction axiale ladite bride (20), et qui est en contact glissant avec ledit carter (5) du générateur de gaz.

5. Dispositif de fixation selon la revendication 4, **caractérisé en ce que** ledit élément de prolongation (42) prolonge la partie radialement intérieure (28) de ladite bride (20).

6. Dispositif de fixation selon la revendication 4 ou 5, **caractérisé en ce que** ledit élément de prolongation (42) est un cylindre dont l'axe est ledit axe commun (A).

7. Dispositif de fixation selon l'une des revendications 4 à 6, **caractérisé en ce que** ledit élément de prolongation (42) est percé de trous oblongs (49).

8. Dispositif de fixation selon l'une des revendications 1 à 7, **caractérisé en ce que** lesdites pièces d'assemblage (30) sont choisies parmi un ensemble constitué par des goujons avec écrous, des vis avec écrous sertis, et des vis avec joncs et écrous.

9. Dispositif de fixation d'un stator (10) de turbine libre sur un carter (5) de générateur de gaz selon l'une quelconque des revendications précédentes, **caractérisé en ce que** ledit stator est un stator de turbine d'un propulseur à hélices non-carénées (UDF).

10. Turbopropulseur comportant un générateur de gaz et une turbine libre dont le stator est assemblé audit générateur de gaz par un dispositif de fixation selon l'une quelconque des revendications précédentes.

## Claims

1. A fastener device for fastening a free turbine stator (10) on a gas generator casing (5) that shares a common axis (A) with the turbine stator, the fastener device comprising a flange (20) carrying a plurality of assembly parts (30) providing a first releasable connection between said turbine stator (10) and said gas generator casing (5), said flange (20) providing first centering of the turbine stator on the gas generator casing (5), said fastener device further comprising a second releasable connection (40) between said turbine stator (10) and said gas generator casing (5) that is axially offset from the flange (20) towards said gas generator and that provides second centering of said turbine stator (10) on said casing (5), the fastener device being **characterized in that** said second connection is a sliding joint.

2. A fastener device according to claim 1, **characterized in that** said first connection is a connection by mutual engagement.

3. A fastener device according to claim 2, **characterized in that** said mutual engagement, first connection is implemented by the fact that said flange (20) has a radially-extending portion (28) that is clamped against an annulus (50) of the casing (5) by said assembly parts (30), and that a portion (24) of the radially-outer surface (22) of said flange is in annular contact with the radially-inner surface (54) of an annular projection (53) of said casing annulus (50) that extends axially towards said turbine stator (10).

4. A fastener device according to any one of claims 1 to 3, **characterized in that** said second connection (40) is constituted by the axial end (44) of an extender element (42) that extends said flange (20) in the axial direction, and that is in sliding contact with said gas generator casing (5).

5. A fastener device according to claim 4, **characterized in that** said extender element (42) extends the radially-inner portion (28) of said flange (20).

6. A fastener device according to claim 4 or claim 5, **characterized in that** said extender element (42) is a cylinder having said common axis (A) as its axis.

7. A fastener device according to one of claims 4 to 6, **characterized in that** said extender element (42) is pierced by oblong holes (49).

8. A fastener device according to one of claims 1 to 7, **characterized in that** said assembly parts (30) are selected from sets constituted by stud bolts with nuts, bolts with spindle nuts, and bolts with retaining rings and nuts.

9. A fastener device for fastening a free turbine stator (10) on a gas generator casing (5) according to any one of the preceding claims, **characterized in that** said stator is a turbine stator of an unducted fan (UDF) engine.

10. A gas turbine engine comprising a gas generator and a free turbine having its stator assembled to said gas generator by a fastener device according to any one of the preceding claims.

## Patentansprüche

1. Vorrichtung zum Befestigen eines Leitrads (10) einer Freifahrturbine auf einem Gehäuse (5) eines Gasgenerators, der mit diesem Turbinenleitrad entlang einer gemeinsamen Achse (A) koaxial ist, umfassend einen Flansch (20) aufweist, der mehrere Montageteile (30) trägt, die eine erste abnehmbare Verbindung des Turbinenleitrads (10) auf dem Gehäuse (5) des Gasgenerators erlauben, wobei der Flansch (20) ein erstes Zentrieren dieses Turbinenleitrads auf dem Gehäuse (5) des Gasgenerators erlaubt, wobei die Vorrichtung ferner eine zweite abnehmbare Verbindung (40) des Turbinenleitrads (10) auf dem Gehäuse (5) des Gasgenerators aufweist, die axial von dem Flansch (20) in Richtung des Gasgenerators entfernt ist und ein zweites Zentrieren des Turbinenleitrads (10) auf dem Gehäuse (5) erlaubt, **dadurch gekennzeichnet, daß** die zweite Verbindung ein Gleitsitz ist.

2. Befestigungsvorrichtung nach Anspruch 1, **dadurch gekennzeichnet, daß** die erste Verbindung eine Einlaßverbindung ist.

3. Befestigungsvorrichtung nach Anspruch 2, **dadurch gekennzeichnet, daß** die erste Einlaßverbindung durch die Tatsache hergestellt wird, daß der Flansch (20) einen radialen Teil (28) aufweist, der gegen einen ringförmigen Kranz (50) des Gehäuses (5) von den Montageteilen (30) gespannt ist, und daß ein Teil (24) der radial äußeren Fläche (22) des Flanschs in ringförmiger Berührung mit der radial inneren Fläche (54) eines ringförmigen Vorsprungs (53) des ringförmigen Gehäusekranzes (50), der sich in Richtung des Turbinenleitrads (10) erstreckt, ist.

4. Befestigungsvorrichtung nach einem der Ansprüche 1 bis 3, **dadurch gekennzeichnet, daß** die zweite Verbindung (40) aus dem axialen Ende (44) eines Verlängerungselements (42) besteht, das den Flansch (20) in axiale Richtung verlängert und das in Gleitkontakt mit dem Gehäuse (5) des Gasgenerators ist.

5. Befestigungsvorrichtung nach Anspruch 4, **dadurch gekennzeichnet, daß** das Verlängerungselement (42) den radial inneren Teil (28) des Flanschs (20) verlängert.

6. Befestigungsvorrichtung nach Anspruch 4 oder 5, **dadurch gekennzeichnet, daß** das Verlängerungselement (42) ein Zylinder ist, dessen Achse die gemeinsame Achse (A) ist.

7. Befestigungsvorrichtung nach einem der Ansprüche 4 bis 6, **dadurch gekennzeichnet, daß** das Verlängerungselement (42) mit Langlöchern (49) durchbohrt ist.

8. Befestigungsvorrichtung nach einem der Ansprüche 1 bis 7, **dadurch gekennzeichnet, daß** die Montageteile (30) aus einer Einheit ausgewählt sind, die aus Stiften mit Muttern, Schrauben mit Einpreßmuttern und Schrauben mit Ringen und Muttern besteht.

9. Befestigungsvorrichtung eines Leitrads (10) einer Freifahrturbine auf einem Gehäuse (5) eines Gasgenerators nach einem der vorhergehenden Ansprüche, **dadurch gekennzeichnet, daß** das Leitrad ein Turbinenleitrad eines Triebwerks mit nicht verkleideten Wendeln (UDF) ist.

10. Turboproptriebwerk mit einem Gasgenerator und einer Freifahrturbine, deren Leitrad mit dem Gasgenerator durch eine Befestigungsvorrichtung nach einem der vorhergehenden Ansprüche zusammengebaut ist.
